# EUROPÄISCHE PATENTSCHRIFT

(11) **EP 2 276 621 B1**
(45) Veröffentlichungstag und Bekanntmachung des Hinweises auf die Patenterteilung: **03.07.2013**
(21) Anmeldenummer: 09731327.4
(22) Anmeldetag: 31.03.2009
(51) Int. Cl.: B29C 49/56, B29C 49/06, B29C 49/12, B29C 49/16, B29C 49/64, B29C 49/36

(54) **VERFAHREN UND VORRICHTUNG ZUR BLASFORMUNG VON BEHÄLTERN**
METHOD AND APPARATUS FOR BLOW-MOLDING CONTAINERS
PROCÉDÉ ET APPAREIL DE MOULAGE DE RÉCIPIENTS PAR SOUFFLAGE

(30) Priorität: 10.04.2008 DE 102008018785
(43) Veröffentlichungstag der Anmeldung: 26.01.2011
(73) Patentinhaber: KHS Corpoplast GmbH, 22145 Hamburg (DE)
(72) Erfinder: LINKE, Michael, 22047 Hamburg (DE); LITZENBERG, Michael, 21502 Geesthacht (DE); BAUMGARTE, Rolf, 22926 Ahrenburg (DE); LEWIN, Frank, 22880 Tangstedt (DE); STRIEBEL, Carlo, 22049 Hamburg (DE)
(74) Vertreter: Hausfeld, Norbert
(86) Internationale Anmeldenummer: PCT/DE2009/000476
(87) Internationale Veröffentlichungsnummer: WO 2009/124539

(56) Entgegenhaltungen:
- EP-A1- 1 880 826
- CH-A5- 690 908
- FR-A1- 2 659 265
- FR-A1- 2 813 231
- US-A1- 2005 142 243
- US-B1- 6 447 281

## Beschreibung

Die Erfindung betrifft ein Verfahren zur Blasformung von Behältern, bei dem ein Vorformling nach einer thermischen Konditionierung innerhalb einer Blasform durch Blasdruckeinwirkung in den Behälter umgeformt wird sowie bei dem Blasgas durch ein Anschlußelement hindurch in einen Innenraum des vorformlings eingeleitet wird und bei dem das Anschlußelement zur Abdichtung gegenüber dem Vorformling in Richtung einer Vorformlingslängsachse von einer Andruckeinrichtung beaufschlagt wird, sowie bei dem die Blasform von einem Träger gehaltert und zumindest bereichsweise gegenüber dem Träger pneumatisch verspannt wird.

Die Erfindung betrifft darüber hinaus eine Vorrichtung zur Blasformung von Behältern, die mindestens eine Blasstation mit einer Blasform aufweist, sowie bei der sich ein Strömungsweg für ein Blasgas zur Blasformung der Behälter durch ein Anschlußelement hindurch erstreckt und bei der die Blasstation mit dem in Richtung einer Längsachse positionierbaren Anschlußelement versehen ist, das mit einer Andruckeinrichtung gekoppelt ist sowie bei der die Blasform von einem Träger gehaltert und zumindest bereichsweise gegenüber dem Träger von einer Vorspanneinrichtung verspannbar angeordnet ist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformlinge eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DB-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformling einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Gemäß dem Stand der Technik ist es bekannt, die Anschlußelemente sowohl pneumatisch als auch mechanisch unter Verwendung von Kurvensteuerungen zu positionieren. Kurvensteuerungen haben sich insbesondere bei Blasmaschinen mit rotierenden Blasrädern bewährt, da hier in Abhängigkeit von einer Rotationsbewegung des Blasrades die jeweiligen Positionierungen von der Kurvensteuerung vorgegeben werden können. Die Verwendung derartiger Kurvensteuerungen vermeidet einen zusätzlichen Druckluftverbrauch.

Typischerweise werden im Bereich der Blasstationen die verwendeten Blasformen von Formträgern gehaltert. Die Blasformen sind in der Regel in zwei seitliche Blasformhälften sowie eine Bodenform unterteilt. Die Formträger werden typischerweise mechanisch miteinander verriegelt oder mechanisch gegeneinander verspannt. Bei einer Umformung der Vorformlinge in die Behälter als Folge einer Blasdruckeinwirkung ist dafür zu sorgen, daß ein Entstehen von Formspalten, die sich auf dem Behälter aufprägen würden, verhindert werden.

Bekannt ist es deshalb, mindestens eine der Blasformhälften pneumatisch gegenüber dem zugeordneten Formträger derart zu verspannen, daß das Entstehen von Formspalten verhindert werden kann. Dies kann beispielsweise dadurch erfolgen, daß der in die Blasstation eingeleitete Blasdruck gleichzeitig auch einer pneumatischen Verspannungseinrichtung zugeführt wird und hierdurch mit einem steigenden Innendruck im zu blasenden Behälter und somit auch in der Blasform auch eine steigende Zuhaltekraft erzeugt wird.

Typischerweise sind die pneumatischen Verspanneinrichtungen, die im Bereich der Blasstation angeordnet sind, über Anschlußschläuche mit zugeordneten Steuerventilen verbunden. Nach einer erfolgten Behälterherstellung und vor einem Öffnen der Blasform wird sowohl der Innendruck aus dem geblasenen Behälter als auch der Druck aus der pneumatischen Spanneinrichtung abgelassen. Typischerweise erfolgt dies unter Verwendung von Schalldämpfern, um entstehende Ausströmgeräusche zu dämpfen.

Aus der CH 690908 A5 ist eine Blaseinrichtung bekannt, bei der einer der Formträger hydraulisch positioniert wird.

In der US 2005/142243 A1 sowie der FR 2659265 A1 werden Blasstationen beschrieben, bei denen die Blasformen pneumatisch gegenüber den Formträgern verspannbar sind. Ein Druckbereich im Bereich der Formträger ist hierzu über einen Schlauch mit der Blasgaszufuhr verbunden.

Die oben erläuterten Abläufe sind typisch für einen ordnungsgemäßen Betrieb der Blaseinrichtung. Für den Fall eines Auftretens von Störungen, beispielsweise im Bereich der verwendeten pneumatischen Ventile, ist es vorgesehen, trotz eines anliegenden Innendruckes im Bereich des geblasenen Behälters und der pneumatischen Spanneinrichtung das Anschlußelement zurückzuziehen und derart von der Blasform zu entfernen, daß das unter Druck stehende Blasgas unmittelbar aus dem geblasenen Behälter in eine Umgebung abströmen kann.

Hierdurch kann in der Regel mit äußerst kurzem Zeitbedarf ein Druckabbau im Behälter gewährleistet werden. Eine entsprechende schnelle Druckabsenkung im Bereich der pneumatischen Spanneinrichtung kann bislang jedoch nicht realisiert werden, da durch die verwendeten Schlauchquerschnitte und die vorgesehene Leitungsführung zeitliche Verzögerungen hinsichtlich des Druckabbaus vorgegeben werden.

Aufgabe der vorliegenden Erfindung ist es daher, ein Verfahren der einleitend genannten Art derart zu verbessern, daß eine beschleunigte Entlüftung erreicht wird.

Diese Aufgabe wird erfindungsgemäß dadurch gelöst, daß das Gas zur pneumatischen Verspannung der Blasform gegenüber dem Träger über einen das Anschlußelement halternden Sockel, der gemeinsam mit dem Anschlußelement positionierbar ist, in den Bereich des Trägers geleitet wird und daß das Gas zur pneumatischen Verspannung sowohl entlang einer Steuerleitung im Bereich des Sockels als auch im Bereich einer sich an diese Steuerleitung anschlie-βenden Verbindungsleitung in den Bereich einer vorspanneinrichtung geleitet wird.

weitere Aufgabe der vorliegenden Erfindung ist es, eine Vorrichtung der einleitend genannten Art derart zu konstruieren, daß eine beschleunigte Entlüftung unterstützt wird.

Diese Aufgabe wird erfindungsgemäß dadurch gelöst, daß sich eine Leitung zur pneumatischen Versorgung der Vorspanneinrichtung zumindest abschnittweise im Bereich eines Sockels erstreckt, der gemeinsam mit dem Anschlußelement positionierbar angeordnet ist und daß ein erster Teil der Leitung als Verbindungsleitung ausgebildet und im Bereich eines die Blasform halternden Trägers der Blasstation angeordnet ist und daß ein zweiter Teil der Leitung als Steuerleitung ausgebildet und im Bereich des Sockels angeordnet ist.

Durch die pneumatische Versorgung der Andruckeinrichtung über den Sockel, der das Anschlußelement haltert, ist es möglich, bei einem Abziehen des Anschlußelementes von der Blasform gleichzeitig mit der Zwangsentlüftung des Innenraumes des geblasenen Behälters auch eine Zwangsentlüftung der pneumatischen Spanneinrichtung durchzuführen. Durch das Abziehen des Sockels von der Blasform wird auch die Versorgungsleitung für die pneumatische Spanneinrichtung aufgetrennt, so daß das unter Druck stehende Gas aus der Spanneinrichtung über einen kurzen Strömungsweg in die Umgebung herausströmen kann und hierdurch ebenfalls mit einer sehr kurzen Zeitverzögerung der gewünschte Druckabbau realisierbar ist.

Durch den nahezu gleichzeitigen und weitgehenden Druckabbau im Bereich des geblasenen Behälters und der pneumatischen Spanneinrichtung kann mit einer geringen zeitlichen Verzögerung eine Öffnung der Blasstation erfolgen.

Eine Auftrennbarkeit der Versorgungsleitung für die Vorspanneinrichtung wird dadurch unterstützt, daß das Gas zur pneumatischen Verspannung sowohl entlang einer Steuerleitung im Bereich des Sockels als auch im Bereich einer sich an diese Steuerleitung anschließenden Verbindungsleitung in den Bereich einer Vorspanneinrichtung geleitet wird.

Eine ausreichende Dichtigkeit gegenüber einer Umgebung kann dadurch gewährleistet werden, daß ein Übergangsbereich von der Steuerleitung in die Verbindungsleitung gegenüber einer Umgebung abgedichtet wird.

Eine Abzweigung des für die vorspanneinrichtung benötigten Gases von einer Blasgaszufuhr zur Blasform kann dadurch erreicht werden, daß das Gas zur pneumatischen Verspannung ausgehend von einer pneumatischen Anschlußleitung im Bereich des Sockels, die für eine Blasgaszufuhr in den zu blasenden Behälter hinein vorgesehen ist, in die Steuerleitung eingeleitet wird.

In einem laufenden Betrieb ist es zur Reduzierung von Schallemissionen vorgesehen, daß nach einem Blasen des Behälters das Gas aus der vorspanneinrichtung mindestens teilweise durch die Anschlußleitung hindurch in den Bereich eines Schalldämpfers geleitet wird.

Im Falle eines Auftretens von Störungen ist es auch möglich, daß in mindestens einem Betriebszustand das Gas aus der Vorspanneinrichtung heraus durch eine der Steuerleitung zugewandte Öffnung der Verbindungsleitung in eine Umgebung austritt.

Insbesondere ist vorgesehen, daß die Öffnung der Verbindungsleitung nach einer Abstandsvergrößerung zwischen dem Sockel und der Blasform freigegeben wird.

Eine exakte Reproduzierbarkeit der durchzuführenden Bewegungen kann dadurch gewährleistet werden, daß der Sockel kurvengesteuert positioniert wird.

Eine schlauchlose Versorgung der vorspanneinrichtung mit Druckgas kann insbesondere dadurch erreicht werden, dal3 der Sockel ein sich in Richtung auf den Träger erstreckendes verlängerungssegment aufweist, durch das sich ein Teil der Steuerleitung hindurch erstreckt.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur veranschaulichung eines grundsätzlichen Aufbaus einer Vorrichtung zur Blasformung von Behältern,
- Fig. 4: eine modifizierte Heizstrecke mit vergrößerter Heizkapazität und
- Fig. 5: einen Längsschnitt durch eine von Formträgern gehalterte Blasstation, bei der ein von einem Sockel gehaltertes Anschlußelement gegen die Blasform verfahren und verspannt ist und
- Fig. 6: die Anordnung gemäß Fig. 5 nach einem Abziehen des vom Sockel gehalterten Anschlußelementes von der Blasform und einer Zwangstrennung einer Versorgungsleitung für eine pneumatische Spanneinrichtung.

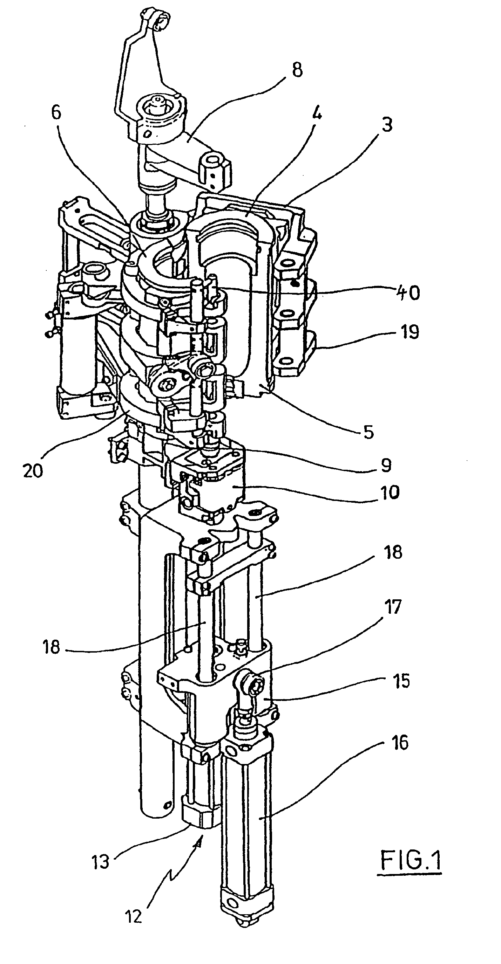

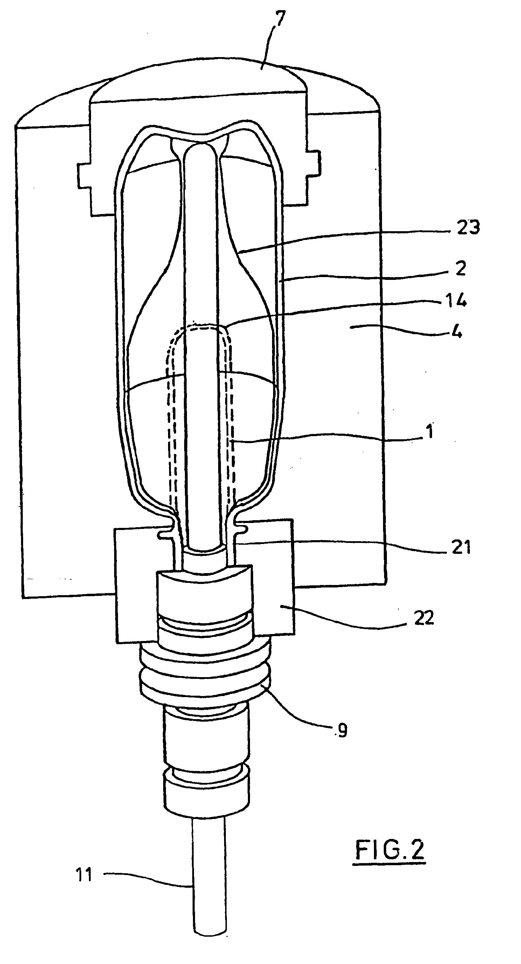

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positio-nierbar ist. Der Vorformling (1) kann im Bereich der Blasstation (3) von einem Transportdorn (9) gehalten sein, der gemeinsam mit dem Vorformlinge (1) eine Mehrzahl von Behandlungsstationen innerhalb der Vorrichtung durchläuft. Es ist aber auch möglich, den Vorformling (1) beispiels-weise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schießen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

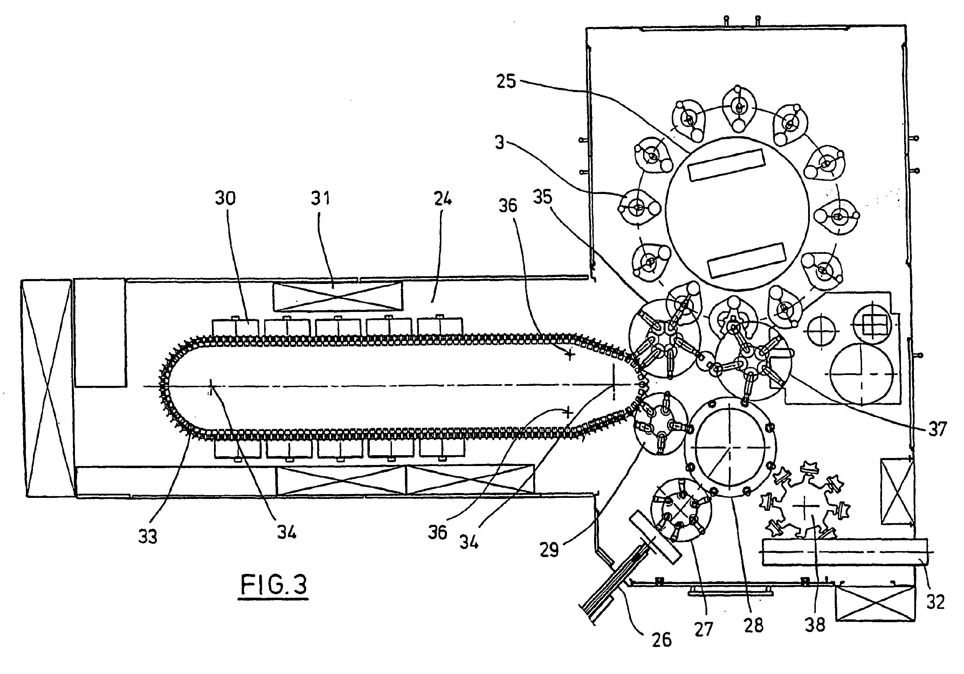

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispiels-weise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

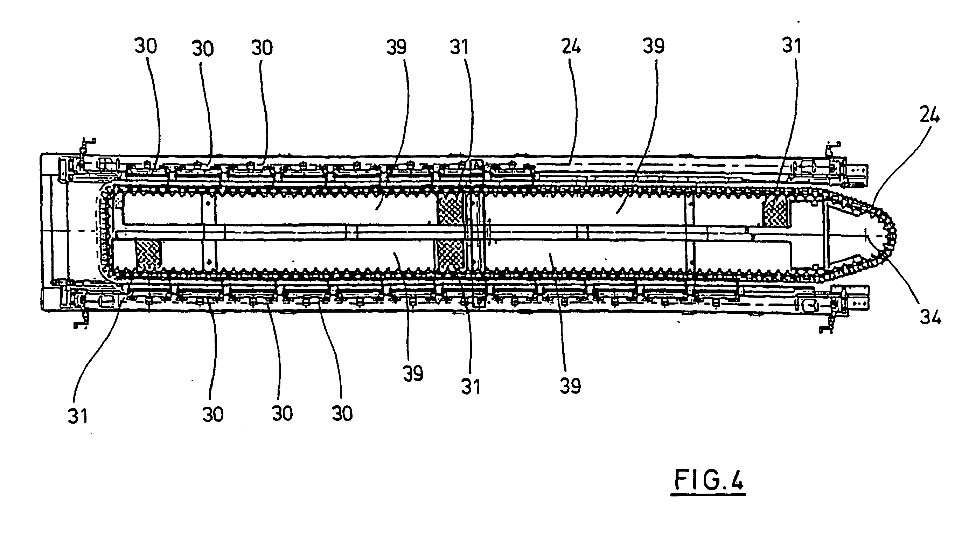

In der in Fig. 4 dargestellten modifizierten Heizstrecke (24) können durch die größere Anzahl von Heizstrahlern (30) eine grö-βere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

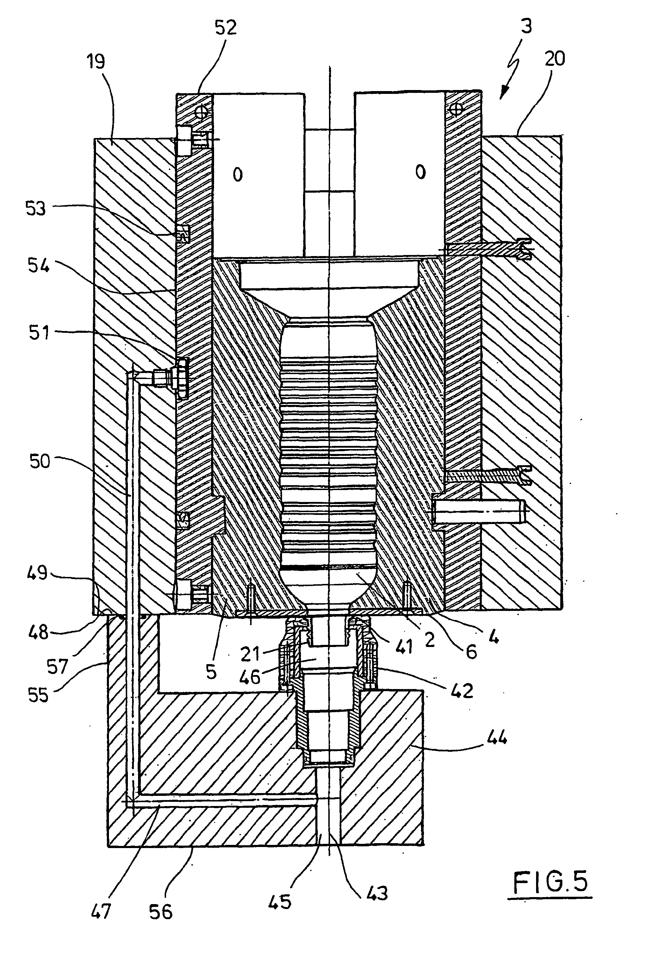

Fig. 5 zeigt eine geschnittene teilweise Darstellung der Blasstation (3). Zu erkennen ist ein geblasener Behälter (2), der mit seinem Mündungsabschnitt (21) aus der Blasform (4) herausragt. Gemäß dem dargestellten Ausführungsbeispiel liegt der Behälter (2) mit seinem Stützring (41) außenseitig auf der Blasform (4) auf. Im dargestellten Betriebszustand ist ein Anschlußelement (42), das dem in Fig. 1 dargestellten Anschlußkolben (10) entsprechen kann, abgedichtet gegen die Blasform (4) gefahren.

Das Anschlußelement (42) ist in Richtung einer im wesentlichen vertikal verlaufenden Längsachse (47) verschieblich angeordnet. Das Anschlußelement (42) wird von einem Sockel (44) gehaltert, durch den sich eine pneumatische Anschlußleitung (45) hindurch erstreckt, die einen Innenraum (46) des Anschlußelementes (42) mit einer nicht dargestellten pneumatischen Versorgung verbindet.

Im Bereich des Sockels (44) zweigt von der Anschlußleitung (45) eine Steuerleitung (47) ab, die im Bereich einer Begrenzungsfläche (48) aus dem Sockel austritt. Die Begrenzungsfläche (48) ist dem die Blasform (4) halternden Träger (19) zugewandt und erstreckt sich im wesentlichen parallel zu einer Begrenzungsfläche (49) des Trägers (19, 20). Als Fortsetzung der Steuerleitung (47) erstreckt sich im Bereich des Trägers (19, 20) eine Verbindungsleitung (50), die im Bereich einer Vorspanneinrichtung (51) endet. Die Vorspanneinrichtung (51) ist dafür vorgesehen, die Formhälfte (5) gegenüber dem Formträger (19) zu verspannen. Typischerweise ist die Vorspanneinrichtung (51) im Bereich einer Formaußenschale (52) angeordnet, die zwischen der Formhälfte (5) und dem Formträger (19) positioniert ist. Im Bereich einer dem Träger (19) zugewandten Begrenzungsfläche der Formaußenschale (52) ist hierbei eine Dichtung (53) positioniert, die einen Druckbereich (54) seitlich umschließt. Vorzugsweise ist die Dichtung (53) als eine Lippendichtung ausgebildet. Grundsätzlich kann aber auch eine Ausführung als vergleichsweise einfacher O-Ring erfolgen.

Eine einfache Fertigung wird dadurch unterstützt, daß die Leitungen (45, 47, 50) als Bohrungen ausgeführt sind. Die Begrenzungsfläche (44) erstreckt sich vorzugsweise im Bereich eines Verlängezungssegmentes (55), das sich soweit über einen Grundkörper (56) des Sockels (44) erhebt, daß diese Erhebung der Ausdehnung des sich über den Sockel (44) erhebenden Teiles des Anschlußelementes (42) entspricht.

Im Bereich der Begrenzungsfläche (48) und/oder der Begrenzungsfläche (49) wird eine Dichtung derart angeordnet, daß die Leitungen (50, 51) abgedichtet gegeneinander geführt werden können. Die Dichtung (57) kann beispielsweise als ein O-Ring ausgeführt sein.

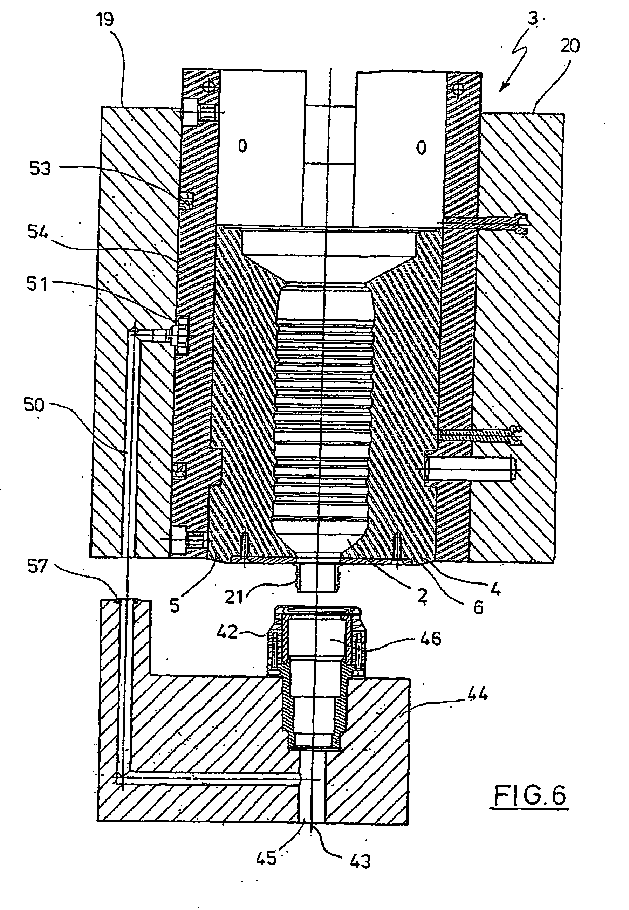

Gemäß dem Betriebszustand in Fig. 6 wurde der Sockel (44) gemeinsam mit dem Anschlußelement (52) derart positioniert, daß in Richtung der Längsachse (43) der Mündungsabschnitt (21) vom Anschlußelement (42) freigegeben ist. Während eines regulären Betriebes erfolgt diese Beabstandung zwischen dem Sockel (44) und der Blasform (4) nach einem vorherigen Ablassen des Innendruckes aus dem geblasenen Behälter (2) durch die pneumatische Anschlußleitung (45) hindurch sowie gleichfalls nach einem Druckabbau im Bereich der Vorspanneinrichtung (51) durch die Verbindungsleitung (50) hindurch.

Ein entsprechendes Abziehen des Anschlußelementes (42) vom Mündungsabschnitt (21) kann aber auch für den Fall eines Auftretens von Störungen bei einem Vorliegen eines Überdruckes innerhalb des Behälters (2) und/oder bei einer anliegenden Druckbeaufschlagung der Vorspanneinrichtung (51) erfolgen. In diesem Betriebszustand entweicht der Druck aus dem geblasenen Behälter (2) nach einem Abziehen des Anschlußelementes (42) aus dem Mündungsabschnitt (21) heraus. Ein Druckabbau im Bereich der Vorspanneinrichtung (51) erfolgt durch das der Dichtung (57) gegenüberliegende Ende der Verbindungsleitung (50). Der Druck im Bereich der Vorspanneinrichtung (51) kann hierdurch über eine kurze Ausströmleitung und somit über einen geringen Strömungswiderstand kurzfristig abgebaut werden, so daß die Blasstation (3) geöffnet und die Formhälften (5, 6) voneinander derart getrennt oder aufgeklappt werden können, daß eine Entnahme des Behälters (2) aus der Blasstation (3) möglich ist.

## Patentansprüche

1. Verfahren zur Blasformung von Behältern (2), bei dem ein Vorformling (1) nach einer thermischen Konditionierung innerhalb einer Blasform (4) durch Blasdruckeinwirkung in den Behälter (2) umgeformt wird sowie bei dem Blasgas durch ein Anschlußelement (42) hindurch in einen Innenraum des Vorformlings (1) eingeleitet wird und bei dem das Anschlußelement (42) zur Abdichtung gegenüber dem Vorformling (1) in Richtung einer Vorformlingslängsachse von einer Andruckeinrichtung beaufschlagt wird, sowie bei dem die Blasform (4) von einem Träger (19, 20) gehaltert und zumindest bereichsweise gegenüber dem Träger (19, 20) pneumatisch verspannt wird, **dadurch gekennzeichnet, daß** das Gas zur pneumatischen Verspannung der Blasform (4) gegenüber dem Träger (19, 20) über einen das Anschlußelement (42) halternden Sockel (44), der gemeinsam mit dem Anschlußelement (42) positionierbar ist, in den Bereich des Trägers (19, 20) geleitet wird und daß das Gas zur pneumatischen Verspannung sowohl entlang einer Steuerleitung (47) im Bereich des Sockels (44) als auch im Bereich einer sich an diese Steuerleitung (47) anschließenden Verbindungsleitung (50) in den Bereich einer Vorspanneinrichtung (51) geleitet wird.

2. Verfahren nach Anspruch 1, **dadurch gekennzeichnet, daß** ein Übergangsbereich von der Steuerleitung (47) in die Verbindungsleitung (50) gegenüber einer Umgebung abgedichtet wird.

3. Verfahren nach einem der Ansprüche 1 oder 2, **dadurch gekennzeichnet, daß** das Gas zur pneumatischen Verspannung ausgehend von einer pneumatischen Anschlußleitung (45) im Bereich des Sockels (44), die für eine Blasgaszufuhr in den zu blasenden Behälter (2) hinein vorgesehen ist, in die Steuerleitung (47) eingeleitet wird.

4. Verfahren nach einem der Ansprüche 1 bis 3, **dadurch gekennzeichnet, daß** nach einem Blasen des Behälters (2) das Gas aus der Vorspanneinrichtung (51) mindestens teilweise durch die Anschlußleitung (45) hindurch in den Bereich eines Schalldämpfers geleitet wird.

5. Verfahren nach einem der Ansprüche 1 bis 4, **dadurch gekennzeichnet, daß** in mindestens einem Betriebszustand das Gas aus der Vorspanneinrichtung heraus durch eine der Steuerleitung (47) zugewandte Öffnung der Verbindungsleitung (50) in eine Umgebung austritt.

6. Verfahren nach Anspruch 5, **dadurch gekennzeichnet, daß** die Öffnung der Verbindungsleitung (50) nach einer Abstandsvergrößerung zwischen dem Sockel (44) und der Blasform (4) freigegeben wird.

7. Verfahren nach einem der Ansprüche 1 bis 6, **dadurch gekennzeichnet, daß** der Sockel (44) kurvengesteuert positioniert wird.

8. Vorrichtung zur Blasformung von Behältern (2), die mindestens eine Blasstation (3) mit einer Blasform (4) aufweist, sowie bei der sich ein Strömungsweg für ein Blasgas zur Blasformung der Behälter (2) durch ein Anschlußelement (42) hindurch erstreckt und bei der die Blasstation (3) mit dem in Richtung einer Längsachse positionierbaren Anschlußelement (42) versehen ist, das mit einer Andruckeinrichtung gekoppelt ist sowie bei der die Blasform (4) von einem Träger (19, 20) gehaltert und zumindest bereichsweise gegenüber dem Träger (19, 20) von einer Vorspanneinrichtung (51) verspannbar angeordnet ist, **dadurch gekennzeichnet, daß** sich eine Leitung zur pneumatischen Versorgung der Vorspanneinrichtung (51) zumindest abschnittweise im Bereich eines Sockels (44) erstreckt, der gemeinsam mit dem Anschlußelement (42) positionierbar angeordnet ist und daß ein erster Teil der Leitung als Verbindungsleitung (50) ausgebildet und im Bereich eines die Blasform (4) halternden Trägers (19, 20) der Blasstation (3) angeordnet ist und daß ein zweiter Teil der Leitung als Steuerleitung (47) ausgebildet und im Bereich des Sockels (44) angeordnet ist.

9. Vorrichtung nach Anspruch 8, **dadurch gekennzeichnet, daß** in einem Übergangsbereich von der Verbindungsleitung (50) zur Steuerleitung (40) eine Dichtung (57) angeordnet ist.

10. Vorrichtung nach einem der Ansprüche 8 oder 9, **dadurch gekennzeichnet, daß** die Steuerleitung (47) im Bereich des Sockels (44) in eine Anschlußleitung (45) einmündet, die einen Innenraum (46) des Anschlußelementes (42) mit einer pneumatischen Versorgung verbindet.

11. Vorrichtung nach einem der Ansprüche 8 bis 10, **dadurch gekennzeichnet, daß** die Verbindungsleitung (50) über die Steuerleitung (47) und die Anschlußleitung (45) unter Zwischenschaltung eines Steuerventils an einen Schalldämpfer anschließbar ist.

12. Vorrichtung nach einem der Ansprüche 8 bis 11, **dadurch gekennzeichnet, daß** der Sockel (44) derart gegenüber dem Träger (19, 20) positionierbar angeordnet ist, daß in mindestens einem Betriebszustand eine dem Sockel (44) zugewandte Ausströmöffnung der Verbindungsleitung (50) in eine Umgebung der Blasstation (3) einmündet.

13. Vorrichtung nach einem der Ansprüche 8 bis 12, **dadurch gekennzeichnet, daß** der Sockel (44) kurvengesteuert positionierbar ist.

14. Vorrichtung nach einem der Ansprüche 8 bis 13, **dadurch gekennzeichnet, daß** der Sockel (44) ein sich in Richtung auf den Träger (19, 20) erstreckendes Verlängerungssegment (55) aufweist, durch das sich ein Teil der Steuerleitung (47) hindurch erstreckt.

## Claims

1. A method for blow-molding containers (2) wherein a preform (1), after having been conditioned thermally in a blow mold (4), is molded by the action of blowing pressure to form the container (2) and wherein blowing gas is passed through a connecting element (42) and introduced into an internal space of the preform (1) and wherein the connecting element (42) is loaded by a pressure device in the direction of a longitudinal preform axis to be sealed against the preform (1), and wherein the blow mold (4) is held by a carrier (19, 20) and is pneumatically braced against the carrier (19, 20) at least in certain areas,
**characterized in that**
- the gas for pneumatically bracing the blow mold (4) against the carrier (19, 20) is introduced into the area of the carrier (19, 20) via a base (44) that holds the connecting element (42) and can be positioned jointly together with the connecting element (42) and that the gas for pneumatically bracing is introduced into the area of a prestressing device (51) both along a control line (47) in the area of the base (44) and in the area of a connecting line (50) disposed adjacent to this control line (47).

2. The method according to Claim 1, **characterized in that** an area of transition from the control line (47) to the connecting line (50) is sealed against an environment.

3. The method according to any one of Claims 1 or 2, **characterized in that** the gas for pneumatically bracing is introduced into the control line (47), starting from a pneumatic connecting line (45) in the area of the base (44), said pneumatic connecting line (45) being provided for supplying blowing gas into the container (2) to be blow-molded.

4. The method according to any one of Claims 1 to 3, **characterized in that**, after the container (2) has been blow-molded, the gas is passed from the prestressing device (51) through the connecting line (45) and into the area of a sound absorber, at least in parts.

5. The method according to any one of Claims 1 to 4, **characterized in that**, in at least one operating state, the gas exits from the prestressing device and into an environment after having passed through an opening of the connecting line (50) facing the control line (47).

6. The method according to Claim 5, **characterized in that** the opening of the connecting line (50) is released after the distance between the base (44) and the blow mold (4) has been increased.

7. The method according to any one of Claims 1 to 6, **characterized in that** the base (44) is positioned in a cam-controlled manner.

8. An apparatus for blow-molding containers (2), which includes at least one blowing station (3) comprising a blow mold (4), wherein a flow path for a blowing gas for blow-molding the containers (2) extends through a connecting element (42) and wherein the blowing station (3) is provided with the connecting element (42) that can be positioned in the direction of a longitudinal axis, said connecting element (42) being coupled to a pressure device, and wherein the blow mold (4) is held by a carrier (19, 20) and is arranged such that it can be braced against the carrier (19, 20) by a prestressing device (51) at least in certain areas, **characterized in that** a line for pneumatically supplying the prestressing device (51) extends in the area of a base (44) at least in certain sections, said base (44) being arranged such that it can be jointly positioned together with the connecting element (42), and further **characterized in that** a first part of the line is designed as a connecting line (50) and is arranged in the area of a carrier (19, 20) of the blowing station (3) holding the blow form (4) and that a second part of the line is designed as a control line (47) and is arranged in the area of the base (44).

9. The apparatus according to Claim 8, **characterized in that** a seal (57) is arranged in an area of transition from the connecting line (50) to the control line (40).

10. The apparatus according to any one of Claims 8 or 9, **characterized in that** the control line (47) leads into a connecting line (45) in the area of the base (44), said connecting line (45) connecting an internal space (46) of the connecting element (42) to a pneumatic supply.

11. The apparatus according to any one of Claims 8 to 10, **characterized in that** the connecting line (50) can be connected to a sound absorber via the control line (47) and the connecting line (45), with a control valve being interconnected.

12. The apparatus according to any one of Claims 8 to 11, **characterized in that** the base (44) is arranged such that it can be positioned in relation to the carrier (19, 20) so that, in at least one operating state, a discharge opening of the connecting line (50) facing the base (44) leads into an environment of the blowing station (3).

13. The apparatus according to any one of Claims 8 to 12, **characterized in that** the base (44) can be positioned in a cam-controlled manner.

14. The apparatus according to any one of Claims 8 to 13, **characterized in that** the base (44) includes an extension segment (55) extending in a direction towards the carrier (19, 20), with a part of the control line (47) extending through said extension segment (55).

## Revendications

1. Procédé de moulage par soufflage de récipients (2), dans le cadre duquel une préforme (1), après avoir subi un conditionnement thermique, est façonnée à l'intérieur du moule de soufflage (4) par l'action de la pression de soufflage dans le récipient (2), et dans le cadre duquel un gaz de soufflage est injecté à travers un élément de raccordement (42) dans un espace intérieur de la préforme (1), l'élément de raccordement (42) étant soumis à l'action d'un dispositif presseur agissant dans le sens d'un axe longitudinal de la préforme pour assurer l'étanchéification par rapport à la préforme (1), et le moule de soufflage (4) étant maintenu par un support (19, 20) et, au niveau de certaines parties au moins, serré pneumatiquement par rapport au support (19, 20), **caractérisée en ce que** le gaz de serrage pneumatique du moule de soufflage (4) par rapport au support (19, 20) est conduit vers le support (19, 20) par un socle (44) maintenant l'élément de raccordement (42) et pouvant être positionné ensemble avec celui-ci, et **en ce que** le gaz de serrage pneumatique est conduit à la fois dans la partie socle (44) par une conduite de commande (47) et vers un dispositif de préserrage (51) par une conduite de raccordement (50) reliée à la conduite de commande (47).

2. Procédé selon la revendication 1, **caractérisé en ce qu'**une zone de transition de la conduite de commande (47) vers la conduite de raccordement (50) est étanchéifiée par rapport à un milieu environnant.

3. Procédé selon l'une des revendications 1 ou 2, **caractérisé en ce que** le gaz de serrage pneumatique venant d'une conduite de branchement pneumatique (45) dans la partie socle (44) destinée à l'adduction de gaz de soufflage dans le récipient (2) à mouler par soufflage est amené dans la conduite de commande (47).

4. Procédé selon l'une des revendications 1 à 3, **caractérisé en ce que**, après le soufflage d'un récipient (2), le gaz du dispositif de préserrage (51) est en partie au moins conduit par la conduite de branchement (45) vers un amortisseur de bruit.

5. Procédé selon l'une des revendications 1 à 4, **caractérisé en ce que**, au cours d'au moins un état opérationnel, le gaz du dispositif de préserrage s'échappe dans un milieu environnant par une ouverture de la conduite de raccordement (50) tournée vers la conduite de commande (47).

6. Procédé selon la revendication 5, **caractérisé en ce que** l'ouverture de la conduite de raccordement (50) est libérée après un agrandissement de l'écartement entre le socle (44) et le moule de soufflage (4).

7. Procédé selon l'une des revendications 1 à 6, **caractérisé en ce que** le positionnement du socle (44) est commandé par came.

8. Dispositif de moulage par soufflage de récipients (2) comportant au moins une station de soufflage (3) avec un moule de soufflage (4) et dans lequel une voie d'écoulement d'un gaz pour le moulage par soufflage des récipients (2) traverse un élément de raccordement (42), et dont la station de soufflage (3) est munie de l'élément de raccordement (42) pouvant positionné dans le sens d'un axe longitudinal et couplé à un dispositif presseur, et dont le moule de soufflage (4) est maintenu par un support (19, 20) et est, au niveau de certaines parties au moins, agencée de façon à pouvoir être serrée pneumatiquement par rapport au support (19, 20) par un dispositif de préserrage (51), **caractérisé en ce qu'**une conduite d'alimentation pneumatique du dispositif de préserrage (51) s'étend en partie au moins dans la partie socle (44) pouvant être positionnée ensemble avec l'élément de raccordement (42), et **en ce qu'**une première partie de la conduite est réalisée sous forme de conduite de raccordement (50) agencée au niveau d'un support (19, 20) de la station de soufflage (3) maintenant le moule de soufflage (4), et **en ce qu'**une deuxième partie de la conduite est réalisée sous forme de conduite de commande (47) agencée au niveau du socle (44).

9. Dispositif selon la revendication 8, **caractérisé en ce qu'**un joint (57) est disposé dans une zone de transition entre la conduite de raccordement (50) et la conduite de commande (40).

10. Dispositif selon l'une des revendications 8 ou 9, **caractérisé en ce que** la conduite de commande (47) aboutit, dans la partie socle (44), dans une conduite de branchement (45) qui relie un espace intérieur (46) de l'élément de raccordement (42) à une alimentation pneumatique.

11. Dispositif selon l'une des revendications 8 à 10, **caractérisé en ce que** la conduite de raccordement (50) peut, par l'intermédiaire de la conduite de commande (47) et de la conduite de branchement (45) et en intercalant une vanne-pilote, être branchée sur un amortisseur de bruit.

12. Dispositif selon l'une des revendications 8 à 11, **caractérisé en ce que** le socle (44) peut être positionné par rapport au support (19, 20) de façon telle qu'au cours d'au moins un état opérationnel une ouverture d'échappement de la conduite de raccordement (50) tournée vers le socle (44) débouche dans un milieu environnant de la station de soufflage (3).

13. Dispositif selon l'une des revendications 8 à 12, **caractérisé en ce que** le positionnement du socle (44) peut être commandé par came.

14. Dispositif selon l'une des revendications 8 à 13, **caractérisé en ce que** le socle (44) présente un segment de prolongement (55) s'étendant en direction du support (19, 20) et traversé par une partie de la conduite de commande (47).
